# EUROPEAN PATENT APPLICATION

(11) **EP 4 203 491 A1**
(43) Date of publication of application: **28.06.2023**
(21) Application number: 22157947.7
(22) Date of filing: 22.02.2022
(51) Int. Cl.: H04Q 9/00

(54) **UTILITY METER WITH ULTRA WIDE BAND COMMUNICATION**

(71) Applicant: Kamstrup A/S, 8660 Skanderborg (DK)
(72) Inventor: Hofni, Jeppe, DK-8660 Skanderborg (DK); Hald, Flemming, DK-8660 Skanderborg (DK)
(74) Representative: Plougmann Vingtoft a/s

(57) **Abstract**

A utility meter comprising one or more wireless communication interfaces for transferring a payload between the utility meter and a communication partner. The utility meter includes security means for securing the payload being transferred via the one or more wireless communication interfaces by a security mechanism such as encryption or authentication. At least one of the wireless communication interfaces is an Ultra Wide Band, UWB, communication interface arranged for determining a distance between the utility meter and a communication partner. The utility meter is arranged to determine a distance between the utility meter and the communication partner and to communicate with the communication partner the wireless communication interface to transfer the payload between the utility meter and the communication partner. If the determined distance is shorter than a first distance limit, the payload will be transferred unsecured or secured at a first security level otherwise the utility meter will refrain from transferring the payload or transfer the payload secured at a second security level.

## Description

### FIELD OF THE INVENTION

The present invention relates to the field of utility meters with wireless communication interfaces, in particular communication interfaces for Ultra Wide Band, UWB, communication and secured transfer of data.

### BACKGROUND OF THE INVENTION

Automatic meter reading (AMR) systems and advanced meter infrastructure (AMI) systems, in the following commonly referred to as remote meter reading systems, are generally known in the art. Utility companies uses such remote meter reading systems to wirelessly read, control and monitor customer utility meters remotely, typically using radio frequency (RF) communication. Remote meter reading systems increase the efficiency and accuracy of collecting meter readings and managing customer billing. AMR systems generally uses a mobile RF communication network for collecting meter readings by drive by or walk by, whereas AMI system uses a fixed RF communication network.

The remote meter reading systems support that the utility meter can be read and optionally controlled from a remote location, thus the methods and means for providing for data security to ensure the privacy of the consumer is very important and often require an advanced security infrastructure.

The remote meter reading systems are designed for specialist use and requires complicated security mechanisms to be in place before meter reading can be performed and often special designed communication equipment is required. Especially authentication of users and user equipment is required and distribution of encryption keys to the user in a secure way is required.

Controlling the utility meter may include operating integrated electrical breakers or valves for connecting or disconnection the supply of a utility. Operation of such breakers or valves may require a technician on site to ensure that the installation is suitable for being reconnected, for that reason remote operation via meter reading systems may be undesired or only acceptable if the installation has been controlled by a technician.

The utility meters are often installed in places which are difficult to access such as meter pits, for that reason direct reading of a meter display and operation of meter buttons is often difficult for consumers of the utility as well as for utility staff. Thus, wireless reading and controlling of the utility meter by the consumer or operator is desired.

### OBJECT OF THE INVENTION

Hence it is an object of the invention to provide an improved and simplified method for wireless reading and operating a utility meter from the proximity of the utility meter. In particular it is an object of the invention to provide a utility meter which is more simple to read and operate wirelessly from the proximity of the utility meter while protecting the privacy of the consumer and the utility installation from undesired operation.

### SUMMARY OF THE INVENTION

Thus, the above described object and several other objects are intended to be obtained in a first aspect of the invention by providing a utility meter comprising: means for measuring a quantity of a utility; one or more wireless communication interfaces for transferring a payload, comprising data and/or commands, between the utility meter and a communication partner; a security means for securing the payload being transferred via the one or more wireless communication interfaces by a security mechanism such as encryption or authentication, characterized in that at least one of the one or more wireless communication interfaces is an Ultra Wide Band, UWB, communication interface arranged for determining a distance between the utility meter and a communication partner, and in that the utility meter is arranged to: determine a distance between the utility meter and the communication partner; communicate with the communication partner via one of the wireless communication interfaces to transfer the payload between the utility meter and the communication partner and if the determined distance is shorter than a first distance limit, transfer the payload unsecured or secured at a first security level else if the determined distance not is shorter than the first distance limit, refrain from transferring the payload or transfer the payload secured or secured at a second security level.

The invention has the advantage that reading of the utility meter via a wireless communication interface, is possible without being in position of the encryption keys or only being in position of encryption keys providing a lower level of security, provided that the communication partner is located within the first distance limit of the utility meter. Hereby an easy and convenient reading of the utility meter by use of a communication partner such as a standard smart phone is made possible. The lower acceptable security level releases requirements for authorization of the user of the communication partner and exchange of encryption keys or certificates. At the same time the consumption data is protected from unauthorized reading from a longer distance than the first distance limit and the privacy of the consumer is protected.

The consumption data of a utility meter can normally be read directly from a display of the utility meter if the person reading the consumption data, e.g. the consumer, has access to the premises where the utility meter is installed. This method of direct reading and level of data security is today accepted by utilities, consumers and authorities. However, reading the display may be difficult if the utility meter is installed in a pit or in another location not easily accessible for the consumer.

On the contrary wireless reading of the utility meter via e.g. a Local Area Network or a short range wireless reading device require securing the consumption data by encryption to protect the privacy of the consumer. To read the utility meter, knowledge of encryption keys and possibly authentication of the user would be required.

If the distance is determined to be shorter than the first distance limit, which is set to be sufficiently short, the communication partner is so close to the utility meter that the person operating the communication partner must have access to the premisses where the utility meter is installed and consequently could have directly read the display of the utility meter, consequently reading the utility meter via a wireless communication interface, within this first distance limit, without being in position of the encryption keys is also acceptable in that the same level of security is obtained as for the direct reading of the display of the utility meter.

The first distance limit may preferably be in the range of 10 cm to 10 meters, such as less than 10 meters, less than 5 meters, less than 2 meters, less than 1.5 meter, less than 1 meter, less than 0.5 meter, less than 30 cm, less than 20 cm. The first distance limit may more preferably be in the range of 20 cm to 10 meters or 20 cm to 5 meters or 20 cm to 2 meters.

By security means is understood any means, methods, HW or SW algorithms suitable for protecting the payload with respect to privacy and/or authentication. The security means may preferably be one or more of an encryption / decryption mechanism, an authentication mechanism. The security means may preferably be based on the Advanced Encryption Standard AES, FIPS 197 November 26, 2001. Alternatively the TLS V 1.3 specification may be used RFC8446 August 2018. By transferring the payload unsecured is understood transmitting the payload in clear text or in another way where the payload is accessible to anyone receiving a data packet including the payload or that the payload and/or transmitting entity is unauthenticated. By transmitting the payload secured is understood that the payload is encrypted and/or authenticated. The first and the second security level may differ in that the encryption keys used for the two different levels are different or in that the cryptographical methods used for the two levels are different. Preferably a first encryption key is used for the first level of security and a second encryption key is used for the second level of security.

It is especially advantageous if the second security level is higher than the first security level or if the second security level provides a higher degree of confidentiality or authenticity than the first security level. Alternatively the first and second security level may use different keys or different key lengths or different security algorithms to provide different security levels. The utility meter may refrain from transferring the payload or at least refrain from transferring the payload unsecured if the distance is determined not to be shorter than the first distance limit. Thus, the utility meter is arranged not to transfer the payload unsecured if the distance is determined not to be shorter than the first distance limit. In other words the utility meter is arranged to if the determined distance is shorter than a first distance limit, transfer the payload unsecured or secured at a first security level else if the determined distance not is shorter / equal to or longer than the first distance limit, refrain from transferring / not transferring the payload or transfer the payload secured or secured at a second security level.

The Ultra Wide Band, UWB, communication interface is to be understood as a communication interface capable of communicating with the UWB interfaces included in smart phones such as Samsung Galaxy S21 or iPhone 11 and 12 series . The Ultra Wide Band, UWB, communication interface is not used as a generic term for any type of ultra wide band communication or communication interface operating in an ultra wide communication band. The term Ultra Wide Band, UWB, communication interface is used for describing the UWB communication interface available in consumer electronics such as smart phones in the same way as NFC communication within the technical field designates a well-defined communication interface used in e.g. smart phones rather than the generic technology near field communication. The UWB communication interface may preferably be implemented according to IEEE Std 802.15.4-2020 and operate in the frequency range of 6-8.5 GHz or 6-9 GHz. Especially the UWB communication interface may be according to IEEE Std 802.15.4a 2007 and/or IEEE Std 802.15.4z 2020. Radio regulation for UWB vary between regions, but especially the frequency ranges between 6.490 and 7.987 GHz (UWB bands 5, 6, 8, and 9, using channels 5 and 9) are preferred bands for UWB operation to achieve global acceptance. The UWB communication interface may be according to the FiRa Consortium UWB PHY Technical Requirements and FiRa Consortium UWB MAC Technical Requirements.

The utility meter is arranged to determine a distance between the utility meter and the communication partner in that the utility meter is arranged to initiate a determination of the distance between the utility meter and the communication partner by the Ultra Wide Band, UWB, communication interface. In other words the utility meter or more specifically the Ultra Wide Band, UWB, communication interface is arranged to determine a distance between the utility meter and a communication partner. Thus the utility meter or more specifically the Ultra Wide Band, UWB, communication interface is arranged to determine a distance between the utility meter and a communication partner comprising a Ultra Wide Band, UWB, communication interface.

The communication partner includes an Ultra Wide Band, UWB, communication interface. Preferably the communication partner is a smart phone or tablet including an Ultra Wide Band, UWB, communication interface and a cellular communication interface and/or a WiFi communication interface. Alternatively the communication partner may be any meter reading device, comprising an Ultra Wide Band, UWB, communication interface, including a data collector or another meter operating as a bridge to an Advanced Metering Infrastructure (AMI). Especially the communication partner may be an electricity meter or home gateway or Multi Utility Controller, comprising an Ultra Wide Band, UWB, communication interface and arranged for collecting consumption data from a utility meter and forward this data via an AMI.

The payload may be transferred via the Ultra Wide Band, UWB, communication interface or via an other wireless communication interface between the utility meter and the communication partner. The other wireless communication interface may preferably be a radio frequency (RF) communication interface such as one of wMBus, NFC, ZigBee, LoRa, Bluetooth or a proprietary communication interface. The communication between the utility meter and the communication partner via one of the wireless communication interfaces implies a wireless transfer of the payload, preferably a Radio Frequency (RF) transmission of the payload.

It may be especially advantageous if the payload is not transferred via NFC. The payload may be transferred between the utility meter and the communication partner via a wireless communication interface which is not a Near Field Communication (NFC) interface. Preferably the payload is transferred between the utility meter and the communication partner via a Radio frequency (RF) wireless communication interface with a communication range of more than 1 meter such as wMBus, NFC, ZigBee, LoRa, Bluetooth, UWB or a proprietary communication interface.

The payload being transferred between the utility meter and the communication partner may be communicated either from the utility meter to the communication partner or in the opposite direction. The data comprised in the payload may be one or more of: an accumulated amount of consumed utility, a flow rate, a power, a temperature, a flow direction, a state of a valve, an electrical current, a Voltage, a state of an electrical breaker, an error message, an alert, a SW version. The payload may include historical or logged values. The payload may as such be any data related to the consumption of the utility measured by the means for measuring a quantity for the utility or other date relevant for the operation of the utility meter. The commands comprised in the payload may be one or more of: a command for controlling an valve, a command for controlling an electrical breaker, a command for writing data to an internal memory of the utility meter, a command for controlling reading of data from an internal memory of the utility meter, a command for controlling a SW update of the utility meter, a command for changing a configuration of the utility meter or any other command for operating the utility meter.

The utility meter may be arranged to receive a command or request from the communication partner for transfer of the payload comprising data elements to the communication partner. Thus a payload is transmitted from the communication partner to the utility meter, the payload comprises a command or request for transfer of date from the utility meter to the communication partner, and the utility meter is arranged to prepare a payload including the requested data and determine a distance between the utility meter and the communication partner; communicate with the communication partner via one of the wireless communication interfaces to transfer the prepared payload between the utility meter and the communication partner and if the determined distance is shorter than a first distance limit, transfer the prepared payload unsecured or secured at a first security level else if the determined distance not is shorter than the first distance limit, refrain from transferring the prepared payload or transfer the prepared payload secured or secured at a second security level.

Throughout the description the words request and command are used interchangeably. This means that a command may be a request for some action or data and a request for some data or action is to be understood as a command requesting the beforementioned action or data.

The one or more wireless communication interfaces may be one or more of a wMBus, NFC, UWB, ZigBee, Sigfox, LoRa, Bluetooth or cellular communication interface or a proprietary communication interface or any other wireless communication interface. Preferably the one or more wireless communication interfaces are Radio Frequency (RF) communication interfaces.

By communicating with the communication partner via one of the wireless communication interfaces to transfer the payload between the utility meter and the communication partner is understood to wirelessly transferring / receiving a data packet comprising a payload. So the payload is understood to be carried by or comprised in a data packet. The data packet is formatted and transmitted / received according to a communication protocol.

The utility meter, also known as a consumption meter or just a meter, may be any type of consumption meter such as a water meter, electricity meter, gas meter, thermal energy meter / heat meter or heat cost allocator. The utility meter is preferably a consumption meter for measuring the consumption /consumed amount of a utility, such as water, gas, electricity or thermal energy at an end user / consumer. The means for measuring an amount of utility is selected to be adequate for the type of consumption meter.

Optionally the utility meter is arranged to increase the first distance limit when the distance between the utility meter and the communication partner at least at one point in time has been determined to be shorter than a second distance limit where the second distance limit is equal to or shorter than the first distance limit. This has the advantage that the communication range may be extended if the communication partner has been brought close enough to the utility meter to comply with very strict restrictions with respect to the physical access to the premises of the utility meter, such as a distance that would also have allowed direct reading of the meter display. The second distance limit may be in the range of 10 cm to 2 meters, such as less than 1.5 meter, less than 1 meter, less than 0.5 meter, less than 30 cm, less than 20 cm or 10 cm.

Optionally the utility further comprises an NFC communication interface wherein the utility meter is arranged to increase the first distance limit as a response to an NFC hand shake between the utility meter and the communication partner. The communication range of NFC is typically less than 5 cm, thus the hand shake via NFC has the advantage that the first distance limit is only increased if the communication partner is held very close to the utility meter. The handshake may include the interchange if identification information between the utility meter and the communication partner. Optionally the utility meter is further arranged to exchange an encryption key with the communication partner via the NFC communication interface and the encryption key is used for securing the communication with the communication partner. Exchange of the encryption key via the NCF communication interface is that the key may be exchanged unsecured or with a low level of security due to the very short communication range of NFC reduces the risk of eavesdropping substantially.

Optionally the utility meter is arranged to increase the first distance limit for a limited time period. This has the advantage that the privacy of the consumer is protected from a third person having access to the premises of the utility meter at a single occasion will be allowed to read the utility meter continuously without any restrictions. More specifically the utility meter may be arranged to increase the first distance limit for a limited time period after a point in time at which the distance between the utility meter and the communication interface has been determined to be shorter than the second distance limit or after a point in time for a NFC handshake. The limited time period may be less than 10 minutes or less than 30 minutes or less than 60 minutes or less than 8 hours or less than 12 hours or less than 24 hours. Alternatively the limited time period may be in the range of 10-30 minutes or 10-60 minutes or 10 minutes to 8 hours or 10 minutes to 12 hours or 10 minutes to 24 hours.

Optionally the utility meter comprises at least two wireless communication interface, the utility meter further being arranged to activate the Ultra Wide Band, UWB, communication interface as a response to a command for activation of the Ultra Wide Band, UWB, communication interface received via a wireless communication interface other than the Ultra Wide Band, UWB, communication interface. The advantage of activating the UWB communication interface via another wireless communication interface is to keep the current consumption low in that both communication interfaces do not need to be active during the same time periods. The second communication interface may be any one of a wMBus, NFC, Sigfox, ZigBee, LoRa, Bluetooth or cellular communication interface or a proprietary communication interface. The command for activation of the Ultra Wide Band, UWB, communication interface may be received from the communication partner.

Optionally the data elements in the payload include consumption data related to a measured quantity of a utility. The Measured quantity of a utility may be a consumed amount of the utility such as a consumed amount/volume of water, gas or energy.

Optionally the utility meter may further comprise a valve or electrical breaker arranged for disconnecting the utility and the utility meter may further be arranged for controlling the valve or electrical breaker according to a received command. Especially for controlling of valves or breakers it is often required that the operator is at the premises of the installation to ensure that the installation is fit for reconnection. Assuring that the operator of the communication partner is within the first distance limit this requirement is fulfilled before reconnecting the installation at the consumer to the utility distribution network is made, which has the advantage that the operator of the communication partner inevitably must have been at the premises of the utility meter.

In a second aspect of the invention is provided a system for reading a utility meter, the system comprising a utility meter according to the first aspect of the invention and a communication partner wherein the communication partner comprises a Ultra Wide Band, UWB, communication interface and a display, the communication partner being arranged to receive a payload from the utility meter and at least partly display data comprised in the payload on the display. The second aspect of the invention has the advantage that the utility meter may be easily wirelessly read at a short distance on the premises where the utility meter is installed. Preferably the communication partner is a smart phone or a tablet. The communication partner may further be arranged to send a request to the utility meter for transfer of the payload comprising data from the utility meter to the communication partner. Preferably the communication partner is arranged to send the request to the utility meter via the Ultra Wide Band, UWB, communication interface.

In a third aspect of the invention is provided a method for transferring a payload, comprising data and/or a command between a utility meter and a communication partner using one or more wireless communication interfaces, characterized in that at least one of the communication interfaces is a Ultra Wide Band, UWB, communication interface arranged for determining a distance between the utility meter and the communication partner, the method comprising the steps of: determining a distance between the utility meter and the communication partner by use of the Ultra Wide Band, UWB, communication interface; comparing the determined distance to a first distance limit; if the determined distance is shorter than the first distance limit, transferring the payload unsecured or secured at a first security level between the utility meter and the communication partner via one of the wireless communication interfaces, else if the determined distance not is shorter than the first distance limit, refrain from transferring the payload or transferring the payload secured or secured at a second security level between the utility meter and the communication partner via one of the wireless communication interfaces.

The method of the third aspect of the invention has the same advantages as the first aspect of the invention and may be combined with all suggested optional and preferred features of the first aspect of the invention. The method according to the third aspect of the invention may be performed by a utility meter or a communication partner. The utility meter or communication partner may implement the method individually or together in a system.

Optionally the method of the third aspect further comprises a step of increasing the first distance limit if the distance between the utility meter and the communication partner is determined to be less than a second distance limit where the second distance limit is equal to or shorter than the first distance limit else maintaining the first distance limit unchanged.

The first and the second distance limits may preferably be the same as described for the first aspect of the invention.

Optionally in the method according to the third aspect the utility meter may comprise a valve or electrical breaker for disconnecting the utility and the payload may comprise a command for controlling the position of the valve or electrical breaker and the method may comprise a further step of controlling the position of the valve or the electrical breaker according to the command if the determined distance is shorter than the first distance limit else refrain from controlling the position of the valve according to the command.

In a fourth aspect of the invention is provided a communication partner such as a mobile phone / smart phone comprising an Ultra Wide Band, UWB, communication interface and being arranged to execute the method according to the third aspect of the invention.

Optionally the communication partner according to the fourth aspect of the invention, further comprises a display and is arranged to at least partly display the payload on the display.

In a fifth aspect of the invention is provided a computer program comprising instructions to cause the communication partner according to the fourth aspect of the invention to execute the steps of the method according to the third aspect of the invention.

In a sixth aspect of the invention is provided a utility meter comprising: means for measuring a quantity of a utility; a valve or electrical breaker for disconnecting the utility; one or more wireless communication interfaces for receiving from a communication partner a payload comprising a command for controlling the position of the valve or electrical breaker, characterized in that at least one of the one or more wireless communication interfaces is an Ultra Wide Band, UWB, communication interface arranged for determining a distance between the utility meter and a communication partner, and in that the utility meter is arranged to: determine a distance between the utility meter and the communication partner; receive from the communication partner the payload comprising the command for controlling the position of the valve or electrical breaker and if the determined distance is shorter than a first distance limit control the position of the valve according to the command else if the determined distance not is shorter than the first distance limit, refrain from controlling the position of the valve according to the command.

The sixth aspect of the invention has the advantage of ensuring that the communication partner is within the first distance limit of the utility meter before controlling the position of the valve or electrical breaker. Especially when connecting the consumer or consumption site to the utility distribution network this is advantageous since in the case of the communication partner being a hand held device such as a mobile phone the operator must also have been within the first distance limit i.e. at the consumption site as required to check the installation before connection.

By a valve or electrical breaker for disconnecting the utility is understood a valve or electrical breaker for disconnecting the consumer or consumption site from the utility distribution network. The valve or electrical breaker for disconnecting the utility is obviously also a valve or electrical breaker for connecting the consumer or consumption site to the utility distribution network.

The first distance limit may preferably be in the range of 10 cm to 10 meters, such as less than 10 meters, less than 5 meters, less than 2 meters, less than 1.5 meter, less than 1 meter, less than 0.5 meter, less than 30 cm, less than 20 cm. The first distance limit may more preferably be in the range of 20 cm to 10 meters or 20 cm to 5 meters or 20 cm to 2 meters or 20 cm to 1 meter.

The Ultra Wide Band, UWB, communication interface described for the first aspect of the invention is also used for the sixth aspect of the invention.

The preferred communication partner described for the first aspect of the invention is also used for the sixth aspect of the invention.

The payload comprising the command for controlling the valve or electrical breaker may be transferred via the Ultra Wide Band, UWB, communication interface or via an other wireless communication interface between the utility meter and the communication partner. The other wireless communication interface may preferably be one of wMBus, NFC, ZigBee, LoRa, Bluetooth or a proprietary communication interface.

It may be especially advantageous if the payload comprising the command for controlling the valve or electrical breaker is not transferred via NFC. The payload comprising the command for controlling the valve or electrical breaker may be transferred between the utility meter and the communication partner via a wireless communication interface which is not a Near Field Communication (NFC) interface. Preferably the payload comprising the command for controlling the valve or electrical breaker is transferred between the utility meter and the communication partner via a short range wireless communication interface with a communication range of more than 1 meter such as wMBus, NFC, ZigBee, LoRa, Bluetooth, UWB or a proprietary communication interface.

The utility meter, also known as a consumption meter, according to any aspect of the invention may be any type of consumption meter such as a water meter, electricity meter, gas meter, thermal energy meter / heat meter or heat cost allocator. The utility meter is preferably a consumption meter for measuring the consumption /consumed amount of a utility, such as water, gas, electricity or thermal energy at an end user / consumer. The means for measuring an amount of utility is selected to be adequate for the type of consumption meter. The means for measuring a quantity of a utility is arranged for measuring the amount or quantity of consumed utility. In other words the means for measuring a quantity of a utility is arranged for measuring the quantity or amount of utility delivered to a consumption site / consumer.

The one or more wireless communication interfaces may be one or more of a wMBus, NFC, UWB, ZigBee, Sigfox, LoRa, Bluetooth or cellular communication interface or a proprietary communication interface or any other wireless communication interface.

The individual aspects of the present invention may each be combined with any of the other aspects. These and other aspects of the invention will be apparent from the following description with reference to the described embodiments.

### BRIEF DESCRIPTION OF THE FIGURES

The invention will now be described in more detail with regard to the accompanying figures. The figures show one way of implementing the present invention and is not to be construed as being limiting to other possible embodiments falling within the scope of the attached claim set.
Figure 1 show a utility meter including multiple wireless communication interfaces,
Figure 2 is a system including a utility meter and a communication partner in three different distances from the utility meter.

### DETAILED DESCRIPTION OF EMBODIMENTS

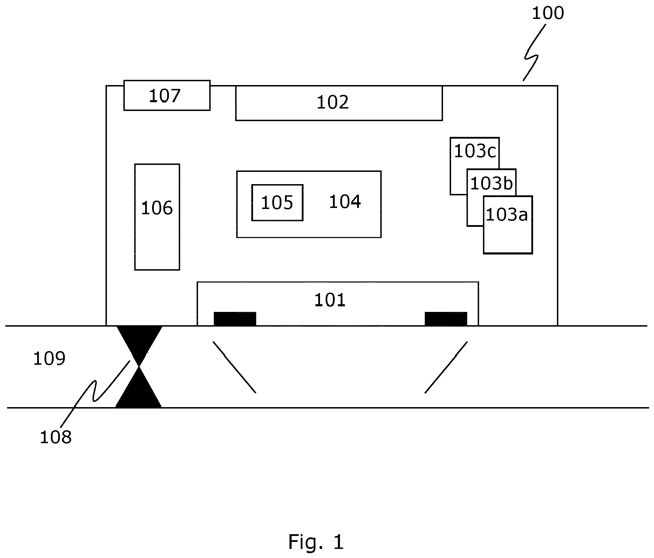

Fig. 1 shows the basic elements of a utility meter 100 in the form of a water meter, such as an ultrasonic water meter. The utility meter includes means for measuring a quantity of a utility in the form of a flow sensor 101 for measuring water flow through a flow pipe 109 an optional display 102, multiple wireless communication interfaces 103a, 103b, 103c where 103a is an Ultra Wide Band (UWB) communication interface, a microcontroller 104 including security means 105, a battery 106, an optional button 107 and an optional valve 108 for disconnecting the supply of the utility.

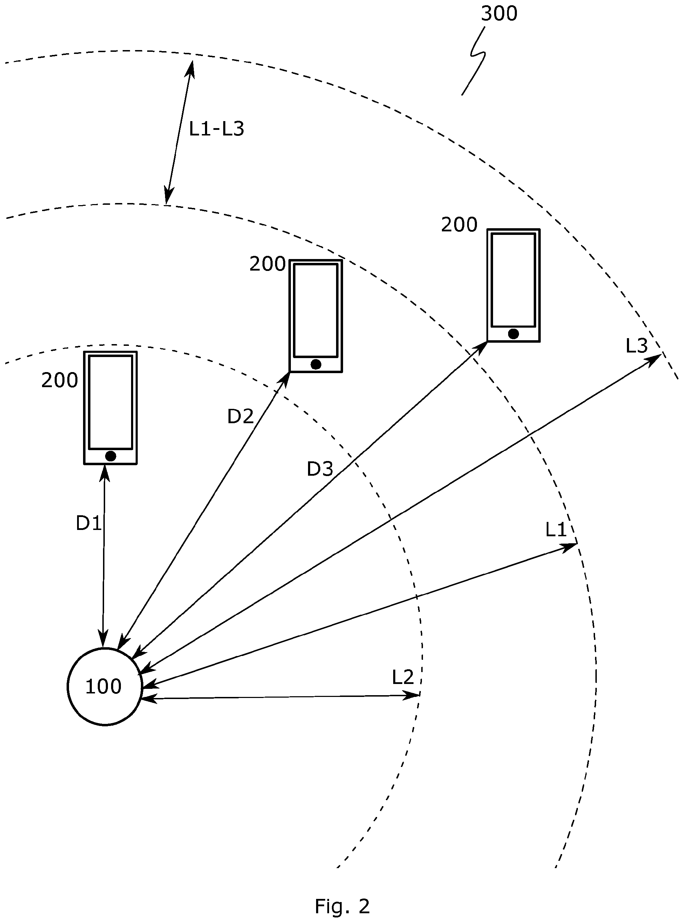

Fig. 2 further shows a communication partner 200 in the form of a cell phone. The cell includes multiple wireless communication interfaces whereof at least one is a Ultra Wide Band (UWB) communication interface and an display and one or more optional buttons.

The utility meter registers the consumption of a utility, such as water consumption, and stores the consumption data in an internal memory. The consumption data is considered personal data and unauthorized persons should not have access to the data. Remote reading of the consumption data, e.g. via an Advance Metering Infrastructure (AMI) is protected by the security means 105 of the utility meter and require knowledge of the encryption keys or certificates used for protecting the consumption data, whereby unauthorized access to the consumption data is prevented. The consumption data may be read directly from a display 102 of the utility meter 100 if the person reading the consumption data, e.g. the consumer, has access to the premises where the utility meter is installed. However, reading the display may be difficult if the utility meter is installed in a pit or in another location not easily accessible for the consumer.

Fig. 2 shows a system 300 for reading a utility meter comprising the utility meter 100 and the communication partner 200. The utility meter may optionally be installed in a meter pit. The utility meter 100 is arranged to initiate a measurement of a distance, D1, D2, D3 between the utility meter and the communication partner using the Ultra Wide Band, UWB, communication interface. If the distance is determined to be shorter than a first distance limit L1 the communication partner is so close to the utility meter that the person operating the communication partner must have access to the premisses where the utility meter is installed and consequently could directly read the display 102 of the utility meter 100, consequently reading the utility meter via a wireless communication interface, within this distance limit L1, without being in position of the encryption keys is also acceptable or alternatively reading the utility meter via a wireless communication interface, within this distance limit L1, only being in position of encryption keys providing a lower level of security is also acceptable. Hereby an easy and convenient reading of the utility meter by use of a communication partner 200 such as a cell phone 200 is made possible. The lower acceptable security level releases requirements for authorization of the user and exchange of encryption keys or certificates.

In an alternative the utility meter 100 in fig. 2 may be any other type of utility meter such as an electricity meter or a thermal energy meter / heat meter or a gas meter. Only difference will be the means for measuring a quantity of a utility that need to be suitable for measuring the different types of utilities and the optional valve would in the case of an electricity meter be replaced by an optional electrical breaker circuit.

The utility meter 100 of fig. 1 includes a microcontroller which is programmed to control the different elements of the utility meter. The microcontroller includes security means for securing communication via the wireless communication interfaces. The security means may include encryption algorithms such as AES128 or AES256 or other suitable encryption algorithms including the Transport Layer Security TLS algorithms. The keys used may be symmetric or asymmetric keys. The microcontroller may implement the algorithms in SW or have HW support for the algorithms. The security means provide methods for encrypting a payload to be transferred over one of the wireless communication interfaces to prevent unauthorized access to the measurement data and ensure the privacy of the consumer. Standard methods for encryption may be use such as Cipher Block Chaining (CBC) or counter mode as described in NIST Special Publication 800-38A, 2001 Edition. For authentication a Message Authentication Code (MAC) such as C-MAC NIST Special Publication 800-38B, 2005 edition or NIST Special Publication 800-38C, 2004 Edition for CCM operation.

The utility meter 100 of fig. 1 includes one or more wireless communication interfaces 103a, 103b, 103c for reading of consumption data from the utility meter and for controlling the utility meter by sending commands to the utility meter. The wireless communication interface includes an Ultra Wide Band (UWB) communication interface 103a. The UWB communication interface 103a may be implemented according to IEEE Std 802.15.4-2020 and operate in the frequency range of 6-8.5 GHz or 6-9 GHz. Especially IEEE Std 802.15.4a 2007 and IEEE Std 802.15.4z 2020 is relevant for UWB communication interface. Radio regulation for UWB vary between regions, but especially the frequency ranges between 6.490 and 7.987 GHz (UWB bands 5, 6, 8, and 9, using channels 5 and 9) are preferred to achieve global acceptance. The FiRa Consortium UWB PHY Technical Requirements and FiRa Consortium UWB MAC Technical Requirements may also be used for implementing the solution. Alternatively the UWB communication interface may be implemented using UWB transceiver chips such as Trimension SR150 or Trimension SR040 manufactured by NXP or other UWB transceiver form other vendors implementing the necessary mechanisms for operating the UWB interface. The utility meter 100 uses the UWB communication interface 103a to estimate the distance D1, D2, D3 between the utility meter and a communication partner which also supports UWB communication according to the abovementioned standards and specifications.

The utility meter 100 is arranged to initiate a measurement of a distance, D1, D2, D3 between the utility meter 100 and the communication partner 200 using the Ultra Wide Band, UWB, communication interface 103a. If the distance is determined to be shorter than a first distance limit L1 the utility meter will allow transfer of a payload to the communication partner 200 or accept to parse a payload received from the communication partner via a wireless communication interface 103a, 1023b, 103c even though the transmitted or received (i.e. transferred) payload is unsecured or secured by use of encryption keys providing a lower level of security. If the utility meter 100 determines that the distance D1, D2, D3 between the utility meter 100 and the communication partner 200 is less than a second distance limit L2 the utility meter may extend L1-L3 the first distance limit L1 to be a longer distance limit L3. The extension of L1 to be L3 may be only for a time limited period. The micro controller 104 of the utility meter 100 is programmed to implement this functionality such as initiating the determination of the distance between the utility meter 100 and the communication partner 200, evaluating and comparing the determined distance D1, D2, D3 with the distance limits L1, L2, L3 to determine the required level of security or to accept transfer of the payload with or without using any security means 105. In general the micro controller 104, 105 of the utility meter 100 is programmed to implement the method as described related to the invention especially the method below. The microcontroller 104 of the utility meter may be arranged to control all elements of utility meter 100 including the button 107, the display 102, the wireless communication interfaces 103a, 103,b, 103c, the means for measuring a quantity of a utility / flow sensor 101 and the valve / electrical breaker 109 including any actuator.

The communication meter 100 may include a logger for registering when and by which communication partner 200 the utility meter is read or communicated with via a wireless communication interface 103a, 103b, 103c either unsecured or with a reduced level of security. The communication partner 200 may be required to deliver an identification, such as an medium access controller address or a device name, to the utility meter when transferring a payload between the two devices, this identification may be stored in the utility meter to be read out on demand by a user or the information may be automatically pushed by the utility meter 100 to a head end system of a AMI to notify the utility or the consumer that the utility meter is being read at a lower security level or even unsecured.

The utility meter may optionally in addition to the UWB communication interface 103a comprise one or more other wireless communication interfaces 103b, 103c. These other wireless communication interfaces may be wMBus implemented according to the EN13757 specification, Near Field Communication(NFC) implemented according to ISO/IEC 18000-3 in 13.56 MHz band, especially NFC interfaces which are compatible with NFC interfaces in most cellular phones are advantageous or Bluetooth. Other wireless communication interfaces may be ZigBee, LoRa or cellular technologies as specified by the 3GGP e.g. NB-IOT LTE-M1, LTE-M2. Further, the wireless communication interfaces may be proprietary communication interfaces e.g. operating in the ISM bands at 434 MHz or 868 MHz or 870 MHz.

Wireless communication interfaces have different levels of energy consumption. To minimize the energy consumption in especially battery operated utility meters the communication interfaces is often kept in a sleep mode for extended periods. To save energy the UWB communication interface 103a may be disabled or powered down for long periods and then only be powered up or enabled after request or command to do so have been received via one of the other wireless communication interfaces 103b, 103c. After a request or command to enable or power up the UWB communication interface has been received on another wireless communication interface the UWB communication interface will be powered up or enabled and kept active for a limited time period. The time period for keeping the UWB communication interface active may be extended by communication received via the UWB communication interface.

The wireless communication interfaces may be used for remote reading of the utility meter via fixed networks such as Advanced Metering Infrastructures including LPWAN technologies or public cellular network technologies. Alternatively the wireless communication interfaces may be used for mobile reading of the utility meters using walk by or drive by reading.

The utility meter 100 may include an optional valve 108 or electric breaker if the utility meter is an electricity meter. The valve 108 includes an actuator and the position of the valve is controlled by the microcontroller via the actuator. The utility meter is arranged to receive commands for changing the position of the valve or breaker via one of the wireless communication interfaces.

The utility meter may include a battery 106 to be self-powered. Especially water meters, heat meters and gas meters may be battery powered whereas electricity meters normally are mains supplied.

The optional button 107 may be in the form of a electromechanical button or a capacitive or inductive touch button or a magnetic sensor suitable for being activated by use of a magnet. The communication partner 200 of fig. 2 may be a smart phone supporting Ultra Wide Band, UWB, wireless communication. The smart phone 200 has a user application installed on it which enables the user to interact with the utility meter via the smart phone, using a touch display of the smartphone. The communication partner preferably includes multiple other wireless communication interfaces such as cellular communication technologies, Near Filed Communication (NFC), Wi-Fi, Bluetooth. A standard smart phone includes those wireless communication technologies. The communication partner is arranged or programmed to request consumption data from the utility meter via one of the wireless communication interfaces e.g. the UWB communication interface. The communication partner displays the consumption data received from the utility meter on the display and the consumer is able to read the utility meter by looking at the display of the communication partner. The communication partner has one or more touch buttons on the display which can be used for configuring or controlling the utility meter. One example of controlling the utility meter is to manipulate the position of a valve 108 integrated in the utility meter 100 by sending a command from the communication partner 200 to the utility meter 100 requesting the utility meter to open or close the valve 108. The communication partner includes security means for securing the communication between the communication partner and the utility meter. Those security means are security means similar to those mentioned for the utility meter or at least security means providing the same functionality. To secure the communication the communication partner needs access to the relevant encryption keys or certificates required for controlling or reading the utility meter. These keys may be received from a head end system via the internet. The user of the communication partner or the communication partner as such need to have the required authorizations to receive the encryption keys or certificates. Alternatively the UWB communication interface is used to determine the distance D1, D2, D3 between the communication partner 200 and the utility meter 100. If the distance D1, D2, D3 is determined to be shorter than a first distance limit L1, the utility meter may be read or controlled without using the encryption keys or certificates or it may be sufficient to use a lower security level e.g. using encryption keys that has been shared over an alternative communication channel without authentication e.g. via NFC communication between the utility meter and the communication partner or the key may be read from the front plate of the utility meter e.g. in the form of reading a bar code or QR code with a camera of the communication partner.

In one embodiment of the invention a method for transferring a payload comprising data or commands between a utility meter and a communication partner is disclosed. The method may more specifically be a method for reading consumption data out of the utility meter or a method for controlling an integrated valve or electrical breaker in the utility meter. The method may be implemented in the microcontroller of a utility meter or in a microcontroller of a communication partner or in a system comprising a utility meter and a communication partner. The method uses a Ultra Wide Band (UWB) communication interface for determining a distance between the utility meter and the communication partner. The technical details of the UWB communication interface are discussed under the description of the utility meter does also apply for the implementation of the method. The method may use the UWB communication interface or another wireless communication interface for transferring data between the utility meter and the communication partner.

The method comprises the following steps:
A:Determing the distance D1, D2, D3 between the utility meter and the communication partner using the UWB communication interface. Distance determination is an intrinsic functionality of the UWB communication as described for the utility meter above. The distance determination may be initiated by the utility meter or the communication partner.
B:Comparing the determined distance D1, D2, D3 to a first distance limit L1 to determine if the distance D1, D2, D3 between the utility meter 100 and the communication partner 200 is shorter than the first distance limit L1. If the first distance limit L1 is made sufficiently short, the communication partner 200 must be located at the premises where the utility meter 100 has been installed.
C:lf the determined distance D1, D2, D3 is shorter than the first distance limit L1, transferring the payload unsecured secured or secured at a first security level between the utility meter 100 and the communication partner 200 via one of the wireless communication interfaces 103a, 103b, 103c, else if the determined distance D1, D2, D3 not is shorter than the first distance limit L1, refrain from transferring the payload or transferring the payload secured or secured at a second security level between the utility meter 100 and the communication partner 200 via one of the wireless communication interfaces 103a, 103b, 103c. Transferring the payload unsecured may in its simplest for be to transfer the payload in clear text without any encryption, including an integrity check of the payload is also considered sending the payload unsecured. Securing the payload by encryption to assure privacy is performed as described for the utility meter above. A received payload such as a command or request may be secured by authentication using a Message Authentication Code (MAC) as described for the utility meter above.

In an optional step D: the determined distance D1, D2, D3 is compared to a second distance limit L2, which is shorter than the first distance limit L1. If the determined distance D1, D2, D3 is shorter than the second distance limit L2, then the first distance limit L1 is extended. In other words the first distance limit L1 is extended to be equal to a third distance limit L3. The extension may be for a time limited period or be limited by other relevant events. When the time period for extension ends the first distance limit L1 is set back to the original value.

In an optional step E: the utility meter 100 and the communication partner 200 is placed close together to communicate via Near Field Communication (NFC). During the NFC communication a session encryption key is exchanged between the utility meter 100 and the communication partner 200. The exchange of the session security key may be done without any security such as encryption or authentication because of the very short distance, less than 5 cm, in which the NFC communication is possible. The session encryption key is used for securing the communication in step C if the determined distance is shorter than the first distance limit L1. Thus, the session encryption key is used for securing the payload at the first security level. The first security level is a lover security level than the second security level because the session key has been exchanged at a lower security level. The session encryption key exchanged during the NFC communication may be a time limited session encryption key only valid for a time limited period. The utility meter and / or the communication partner may time stamp the session encryption key or setup a timer for expiring the session encryption key.

In a step C1 which is an alternative to step C: Including a command for changing the position of a valve 108 or electrical breaker in a payload, if the determined distance D1, D2, D3 is shorter than the first distance limit L1, transferring the payload unsecured or secured at a first security level from the communication partner 200 to the utility meter 100 via one of the wireless communication interfaces 103a, 103b, 103c, else if the determined distance D1, D2, D3 not is shorter than the first distance limit L1, refrain from transferring the payload or transferring the payload secured or secured at a second security level from the communication partner 200 to the utility meter 100 via one of the wireless communication interfaces 103a, 103b, 103c. Transferring the payload unsecured may in its simplest for be to transfer the payload in clear text without any encryption, including an integrity check of the payload is also considered sending the payload unsecured. Securing the payload by encryption to assure privacy is performed as described for the utility meter above. A received payload such as a command or request may be secured by authentication using a Message Authentication Code (MAC) as described for the utility meter above.

In a step C2 which is an alternative to step C and step C1 or an addition to step C and step C1: Receiving a payload comprising a command for changing the position of a valve or electrical breaker, if the determined distance D1, D2, D3 is longer than the first distance limit L1 and the payload is unsecured or secured at a first security level refrain from executing the command, else if the determined distance is shorter than the first distance executing the command.

In step C1 and C2 the command for changing the position of a valve 108 or electrical breaker may in alternative be a command for: requesting consumption data, updating SW / Firmware of the utility meter, configuring the utility meter, reading a memory or register of the utility meter, writing to a memory or register of the utility meter, reading a data logger of the utility meter, reading or resetting an alarm in the utility meter or any other normal operation on a utility meter.

A utility meter 100 comprising a Ultra Wide Band (UWB) communication interface 103a may use the UWB communication interface for multiple other purposes or as a replacement of other wireless communication interfaces such as Bluetooth, NFC, wireless MBus, Zigbee or optical communication interfaces.

The UWB communication interface 103a may be used during installation of the utility meter at a consumption site / at a consumer for transferring meter ID, meter configuration, encryption keys, commands for entering an installation mode or commands for connecting to a network such as a LPWAN network between the utility meter and a communication partner. The communication partner may forward relevant information, such as meter identification, meter configuration, encryption keys or other data from the utility meter, to a head end system or a data collector where it may be used for registering the utility meter in the system or connecting it to a communication network.

The UWB interface 103a may also be used for provisioning of a utility meter 100 e.g. for transferring encryption keys or certificates to and from the utility meter. SIM information, or eSIM update may be transferred to the utility meter 100 via the communication partner 200 using the UWB communication interface 103a. The communication partner 200 may have retrieved the information or configuration data or provisioning information or encryption keys or certificates from a head end system, a service provider or another trusted partner before transferring it to the utility meter 100 via the UWB communication interface 103a. Likewise information from the utility meter 100 may be transferred to the beforementioned entities.

The UWB interface 103a may be used for sending SW / firmware updates to the utility meter 100. The SW update may be a full reprogramming of the utility meter SW / firmware or limited to parts of the SW / firmware. The SW / firmware update may be done before or after the utility meter 100 is installed at a consumer. The UWB communication interface 103a may also be used for a first time programming of the utility meter 100 e.g. in a production environment. In such a case the communication partner may be a production equipment. Especially the utility meter 100 may be SW updated via the UWB communication interface 103a using a smart phone as communication partner 200. The smart phone 200 has an app for updating the utility meter 100. The smart phone will retrieve the update SW / firmware for the utility meter from a server or head end system via the internet using e.g. cellular communication and send the update SW / firmware to the utility meter 100 via the UWB communication interface 103a. The UWB interface may also be used for sending commands to the utility meter for verifying, authorizing or authenticating the SW / firmware. The communication may be end to end encrypted between a head end system / server and the utility meter. The Communication partner as such only is a bridge or gateway for the communication.

During a verification or a calibration process of a utility meter the UWB communication interface may be used for communication with the utility meter. In such a setup the communication partner may be part of the test / calibration or verification equipment e.g. the communication partner may be a communication box being part of a test bench or flow bench. The UWB interface may be used for determining the position of a utility meter in test setup, such as a test bench or flow bench. The utility meter may be controlled via the UWB interface during a calibration or verification process, such as controlling the measuring circuits of the utility meter, starting and stopping measurements, writing calibration or verification data to the utility meter, setting the utility meter in a special calibration or verification mode.

The UWB communication interface may be used for drive by reading or fall back reading of the utility meter.

The invention can be implemented by means of hardware, software, firmware or any combination of these. The invention or some of the features thereof can also be implemented as software running on one or more data processors and/or digital signal processors.

The individual elements of an embodiment of the invention may be physically, functionally and logically implemented in any suitable way such as in a single unit, in a plurality of units or as part of separate functional units. The invention may be implemented in a single unit, or be both physically and functionally distributed between different units and processors.

Although the present invention has been described in connection with the specified embodiments, it should not be construed as being in any way limited to the presented examples. The scope of the present invention is to be interpreted in the light of the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A utility meter (100) comprising:
- means for measuring a quantity of a utility (101);
- one or more wireless communication interfaces (103a, 103b, 103c) for transferring a payload, comprising data and/or a command, between the utility meter (100) and a communication partner (200);
- a security means (105) for securing the payload being transferred via the one or more wireless communication interfaces by a security mechanism such as encryption or authentication,
**characterized in that**
at least one of the one or more wireless communication interfaces (103a, 103b, 103c) is an Ultra Wide Band, UWB, communication interface (103a) arranged for determining a distance (D1, D2, D3) between the utility meter (100) and a communication partner (200), and **in that** the utility meter (100) is arranged to:
- determine a distance (D1, D2, D3) between the utility meter (100) and the communication partner (200);
- communicate with the communication partner (200) via one of the wireless communication interfaces (103a, 103b, 103c) to transfer the payload between the utility meter (100) and the communication partner (200) and if the determined distance (D1, D2, D3) is shorter than a first distance limit (LI), transfer the payload unsecured or secured at a first security level else if the determined distance (D1, D2, D3) not is shorter than the first distance limit (LI), refrain from transferring the payload or transfer the payload secured or secured at a second security level.

2. The utility meter according to claim 1 wherein the utility meter (100) is arranged to increase the first distance limit (L1) when the distance (D1) between the utility meter (100) and the communication partner (200) at least at one point in time has been determined to be shorter than a second distance (L2) limit where the second distance limit (L2) is equal to or shorter than the first distance limit (L1).

3. The utility meter according to claim 1, further comprising an NFC communication interface (103a, 103b, 103c) wherein the utility meter is arranged to increase the first distance limit (L1) as a response to an NFC hand shake between the utility meter (100) and the communication partner (200).

4. The utility meter according to claim 3 further being arranged to exchange an encryption key with the communication partner (200) via the NFC communication interface (103a, 103b, 103c) and the encryption key is used for securing the communication with the communication partner (200).

5. The utility meter according to any of claims 2 - 4, wherein the first distance limit (L1) only is increased for a limited time period.

6. The utility meter according to any of the preceding claims, at least comprising two wireless communication interface (103b, 103c), the utility meter (100) further being arranged to activate the Ultra Wide Band, UWB, communication interface (103a) as a response to a command for activation of the Ultra Wide Band, UWB, communication interface (103a) received via a wireless communication interface (103b, 103c) other than the Ultra Wide Band, UWB, communication interface (103a).

7. The utility meter according to any of the preceding claims, wherein the data elements in the payload include consumption data related to a measured quantity of a utility.

8. The utility meter according to any of the preceding claims, further comprising a valve (108) or electrical breaker arranged for disconnecting the utility and the utility meter (100) further being arranged for controlling the valve (108) or electrical breaker according to a received command.

9. A system for reading a utility meter (300) comprising a utility meter (100) according to any of claims 1 - 8 and a communication partner (200) wherein the communication partner comprises a Ultra Wide Band, UWB, communication interface and a display, the communication partner (200) being arranged to receive a payload from the utility meter (100) and at least partly display data comprised in the payload on the display of the communication partner.

10. A method for transferring a payload, comprising data and/or a command, between a utility meter (100) and a communication partner (200) using one or more wireless communication interfaces (103a, 103b, 103c),
**characterized in that** at least one of the communication interfaces is a Ultra Wide Band, UWB, communication interface (103a) arranged for determining a distance (D1, D2, D3) between the utility meter (100) and the communication partner (200), the method comprising the steps of:
- determining a distance between the utility meter (100) and the communication partner (200) by use of the Ultra Wide Band, UWB, communication interface (103a);
- comparing the determined distance (D1, D2, D3) to a first distance limit (LI);
- if the determined distance is shorter than the first distance limit, transferring the payload unsecured or secured at a first security level between the utility meter (100) and the communication partner (200) via one of the wireless communication interfaces (103a, 103b, 103c), else if the determined distance (D1, D2, D3) not is shorter than the first distance limit (LI), refrain from transferring the payload or transferring the payload secured or secured at a second security level between the utility meter (100) and the communication partner (200) via one of the wireless communication interfaces (103a, 103b, 103c).

11. The method according to claim 10 further comprising a step of:
- increasing the first distance limit (L1) if the distance between the utility meter (100) and the communication partner (200) is determined to be less than a second distance limit (L2) where the second distance limit is equal to or shorter than the first distance limit (L1) else maintaining the first distance limit unchanged.

12. The method according to any of claims 10 - 11, where the utility meter (100) comprises a valve (108) or electrical breaker for disconnecting the utility and where the payload comprises a command for controlling the position of the valve (108) or electrical breaker and the method comprising a further step of controlling the position of the valve (108) or the electrical breaker according to the command if the determined distance (D1, D2, D3) is shorter than the first distance limit (L1) else refrain from controlling the position of the valve (108) according to the command.

13. A communication partner (200) such as a mobile phone comprising an Ultra Wide Band, UWB, communication interface and being arranged to execute the method according to any of claims 10-12.

14. The communication partner according to claim 13, further comprising a display and being arranged to at least partly display the payload on the display.

15. A computer program comprising instructions to cause the communication partner of any of claims 13-14 to execute the steps of the method of any of claims 10 - 12.
